# EUROPEAN PATENT SPECIFICATION

(11) **EP 4 492 517 B1**
(45) Date of publication and mention of the grant of the patent: **20.08.2025**
(21) Application number: 24185009.8
(22) Date of filing: 27.06.2024
(51) Int. Cl.: H01M 10/04, H01M 50/105, H01M 50/124, H01M 50/178, H01M 50/193

(54) **BATTERY CELL AND METHOD OF MANUFACTURING BATTERY CELL**
BATTERIEZELLE UND VERFAHREN ZUR HERSTELLUNG EINER BATTERIEZELLE
ÉLÉMENT DE BATTERIE ET PROCÉDÉ DE FABRICATION D'ÉLÉMENT DE BATTERIE

(30) Priority: 07.07.2023 JP 2023111879
(43) Date of publication of application: 15.01.2025
(73) Proprietor: Mazda Motor Corporation, Aki-gun Hiroshima 730-8670 (JP)
(72) Inventor: ISHIKAWA, Takaaki, Aki-gun, Hiroshima 730-8670 (JP); KAJIMOTO, Takanori, Aki-gun, Hiroshima 730-8670 (JP)
(74) Representative: Müller-Boré & Partner Patentanwälte PartG mbB

(56) References cited:
- JP-A- 2014 072 348
- JP-B2- 4 862 971
- KR-A- 20140 119 560

## Description

### [Technical Field]

The present invention relates to a battery cell and a method of manufacturing a battery cell.

### [Background Art]

A conventional laminated battery is disclosed in Patent Literature 1. The conventional laminated battery is a battery in which an electrode body is accommodated in an exterior member. The conventional laminated battery includes plural current-collecting terminals that are drawn from the electrode body to the outside of the exterior member. The plural current-collecting terminals are superimposed on each other with a thermoplastic resin being interposed between two each of the plural current-collecting terminals. A peripheral edge portion of the exterior member is closed by welding the thermoplastic resin to the peripheral edge portion of the exterior member. **In** this conventional laminated battery, each of the plural current-collecting terminals is drawn to the outside of the exterior member, and the plural current-collecting terminals are not connected to each other in the exterior member. **In** this conventional laminated battery, a space inside the exterior member can be used to enlarge the electrode body, which is advantageous for improving energy density of the battery.

### [Citation List]

[Patent Literature 1] JP2009-272161A

### [Summary]

### [Technical Problem]

The conventional laminated battery is manufactured by a heat-sealing process. In the heat-sealing process, the thermoplastic resins superimposed on each other in the peripheral edge portion of the exterior member are welded to each other by pressing a heat plate as an energy supply source against the thermoplastic resins in a superimposed direction.

Here, when the number of current collectors is increased in a battery cell that has the same structure as the conventional laminated battery, a large number of stacked resins have to be welded together during manufacturing of the battery cell. When the large number of the resins are stacked on each other, the resin at a center in a stacking direction is located far away from the energy supply source. As a result, there is a possibility that sufficient energy is not supplied to the resin located at the center, which results in insufficient welding of the resin located at the center.

The object of the present invention is to suppress insufficient welding of a resin during manufacturing of a battery cell.

### [Solution to Problem]

The above object is achieved by the present invention as defined in independent claims. Particularly, a battery cell includes:
a pouch that accommodates electrodes;
plural current collectors, each of which is connected to a corresponding one of the electrodes in the pouch, the plural current collectors being stacked in a stacking direction, the plural current collectors projecting to the outside of the pouch through an opening of the pouch;
a first resin that seals the opening of the pouch, the first resin being welded to the current collector at a position between the stacked current collectors; and
a second resin that seals the opening of the pouch, the second resin being welded to the current collector at a position between the stacked current collectors, being located closer to a center in the stacking direction than the first resin is to the center, and being thinner than the first resin in the stacking direction.

**In** the battery cell, each of the plural stacked current collectors projects to the outside of the pouch through the opening of the pouch. The plural current collectors are connected to the electrodes with the same polarity, for example. **In** the pouch, the plural current collectors are not mutually connected. Thus, a space for connecting the current collectors in the pouch can be eliminated. As a result, the electrodes of the battery cell can be enlarged by using the space in the pouch. **In** this way, energy density of the battery cell can be increased.

The opening of the pouch is sealed by the first resin and the second resin. The first resin and the second resin are supplied with energy for welding during manufacturing of the battery cell. Each of the first resin and the second resin is a thermoplastic resin, for example. The energy supplied to the first resin and the second resin is thermal energy, for example. However, the energy for welding is not limited to the thermal energy. The energy may be vibration energy, for example. An interface between the first resin and the second resin, each of which is supplied with the vibration energy, is welded by frictional heat.

The current collectors, the first resin, and the second resin are stacked in the stacking direction. An energy supply source, such as a heat plate, is located on the outer side in the stacking direction and supplies the energy from the outer side toward the center. The energy is transferred to the second resin through the current collectors and the first resin. Due to attenuation of the energy, the energy supplied to the second resin, which is located at the center in the stacking direction, is lower than the energy supplied to the first resin, which is located on the outer side in the stacking direction.

Here, the second resin is thinner than the first resin in the stacking direction. Although the energy supplied to the second resin is low, the supply energy per unit volume to the second resin is equivalent to the supply energy per unit volume to the first resin. Since the energy commensurate with the volume is supplied to the second resin, the second resin can sufficiently be welded to the current collector or another resin. Since the energy commensurate with the volume is also supplied to the first resin, the first resin can also sufficiently be welded to the current collector or another resin. **In** this way, it is possible to suppress insufficient welding of the resin during manufacturing of the battery cell.

The battery cell may further include a third resin that seals the opening of the pouch, the third resin being welded to the current collector at a position between the stacked current collectors, being located between the first resin and the second resin in the stacking direction, being thinner than the first resin in the stacking direction, and being thicker than the second resin in the stacking direction.

The third resin is located between the first resin and the second resin in the stacking direction. The energy for welding is transferred in an order of the first resin, the third resin, and the second resin.

The thickness of the third resin in the stacking direction is less than the thickness of the first resin and greater than the thickness of the second resin. The supply energy per unit volume to the third resin is equivalent to the supply energy per unit volume to the second resin or the supply energy per unit volume to the first resin. Since the energy commensurate with the volume is supplied to the first resin, the second resin, and the third resin, each of the first resin, the second resin, and the third resin can stably and sufficiently be welded to the current collector or another resin.

Portions of the current collectors, to which the first resin and the second resin are welded, may be thicker than the other portions thereof in the stacking direction.

For example, the current collector that is made of metal has higher energy transfer efficiency for welding than the resin, and examples of the energy are thermal energy and vibration energy. The metallic current collector has lower specific heat than the resin. The metallic current collector has higher Young's modulus than the resin. The current collector transfers the energy for welding relatively easily. In the case where the portion of the current collector, to which the resin is welded, is thick, the thickness of the resin is reduced. As a result, attenuation of the energy is suppressed during the energy transfer for welding in the stacking direction. The suppression of the energy attenuation is advantageous for the energy supply to the second resin at the center.

The second resin may have a lower melting point than the first resin.

In the case where the second resin has the low melting point, the second resin can be welded to the current collector or another resin even with the low supply energy to the second resin. The second resin with the low melting point can suppress insufficient welding of the resin.

Further particularly, a battery cell includes:
a pouch that accommodates electrodes;
plural current collectors, each of which is connected to a corresponding one of the electrodes in the pouch, the plural current collectors being stacked in a stacking direction, the plural current collectors projecting to the outside of the pouch through an opening of the pouch;
a first resin that seals the opening of the pouch, the first resin being welded to the current collector at a position between the stacked current collectors; and
a second resin that seals the opening of the pouch, the second resin being welded to the current collector at a position between the stacked current collectors, being located closer to a center in the stacking direction than the first resin is to the center, and having a lower melting point than the first resin.

As described above, in the case where the second resin has the low melting point, the second resin can be welded even with the low supply energy to the second resin. Therefore, it is possible to suppress insufficient welding of the resin.

An additive may be added to the second resin. The additive may be configured to lower the melting point.

Use of the additive is effective in lowering the melting point of the resin.

Further particularly, a method of manufacturing a battery cell includes:
stacking electrode sheets in a stacking direction, each of the electrode sheets having: an electrode located in a pouch; and a current collector connected to the electrode in the pouch and projecting to the outside from an opening of the pouch;
pressurizing and heating a first resin and a second resin from an outer side toward a center in the stacking direction, the first resin being located between the stacked current collectors, the second resin being located between the current collectors and closer to the center in the stacking direction than the first resin is to the center, and being thinner than the first resin in the stacking direction; and
at positions between the current collectors, welding the first resin and welding the second resin to seal the opening of the pouch.

When the electrode sheets are stacked during manufacturing of the battery cell, the plural current collectors, the first resin, and the second resin are stacked in the stacking direction, and the first resins and the second resins are located between the current collectors. The current collectors, the first resin, and the second resin are pressurized and heated from the outer side toward the center in the stacking direction. The thermal energy is transferred to the second resin through the current collector and the first resin.

The second resin is thinner than the first resin in the stacking direction. The thermal energy per unit volume supplied to the second resin is equivalent to the thermal energy per unit volume supplied to the first resin. The second resin can sufficiently be welded by the supplied thermal energy. The first resin can also be welded stably and sufficiently. In this way, it is possible to suppress insufficient welding of the resin during manufacturing of the battery cell.

Further particularly, a method of manufacturing the battery cell includes:
stacking electrode sheets in a stacking direction, each of the electrode sheets having: an electrode located in a pouch; and a current collector connected to the electrode in the pouch and projecting to the outside from an opening of the pouch;
pressurizing and heating a first resin and a second resin from an outer side toward a center in the stacking direction, the first resin being located between the stacked current collectors, the second resin being located between the current collectors and closer to the center in the stacking direction than the first resin is to the center, and having a lower melting point than the first resin; and
at positions between the current collectors, welding the first resin and welding the second resin to seal the opening of the pouch.

The second resin has the lower melting point than the first resin. Even when the thermal energy supplied to the second resin is low, the second resin can sufficiently be welded by the supplied thermal energy. Meanwhile, since the high thermal energy is supplied to the first resin with the high melting point, the first resin can sufficiently be welded. **In** this way, it is possible to suppress insufficient welding of the resin during manufacturing of the battery cell.

The manufacturing method may further include: heating the second resin through the current collector that is in contact with the second resin during pressurizing and heating of the first resin and the second resin.

To the second resin at the center in the stacking direction, the thermal energy is supplied not only in the stacking direction, the thermal energy is supplied but also through the current collector. Therefore, the second resin at the center in the stacking direction can be welded stably and sufficiently.

### [Advantageous Effects]

According to the battery cell and the method of manufacturing the battery cell, it is possible to suppress insufficient welding of the resin during manufacturing of the battery cell.

### [Brief Description of Drawings]

[Fig. 1] Fig. 1 is a cross-sectional view of a battery cell.
[Fig. 2] Fig. 2 is a perspective view of an electric power generating element that is accommodated in a pouch.
[Fig. 3] Fig. 3 includes views in which a left view illustrates a state before welding of a resin for sealing an opening of the pouch, and a right view illustrates a state after welding of the resin.
[Fig. 4] Fig. 4 illustrates a structure of a battery cell according to a modified example.
[Fig. 5] Fig. 5 illustrates a structure of a battery cell according to another modified example.
[Fig. 6] Fig. 6 includes views in which a left view illustrates a state before welding of a resin in the battery cell according to the modified example, and a right view illustrates a state after welding of the resin.
[Fig. 7] Fig. 7 illustrates a structure of a battery cell according to further another modified example.
[Fig. 8] Fig. 8 illustrates a method of manufacturing the battery cell according to the modified example.

### [Description of Embodiments]

A description will hereinafter be made on embodiments of a battery cell and a method of manufacturing a battery cell with reference to the drawings. The battery cell and the method of manufacturing a battery cell described herein are merely illustrative.

### (Structure of Battery Cell)

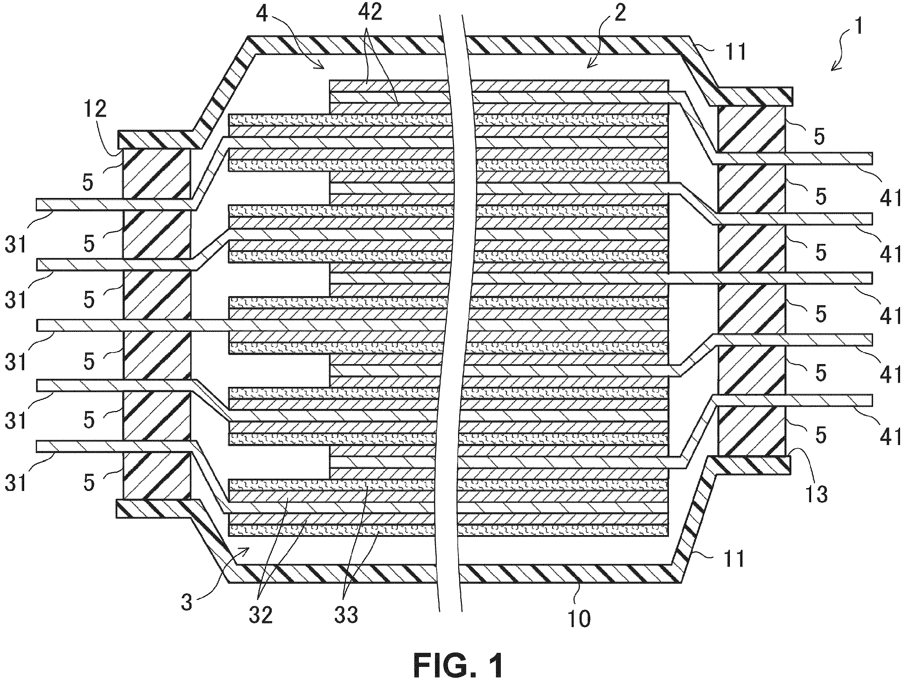

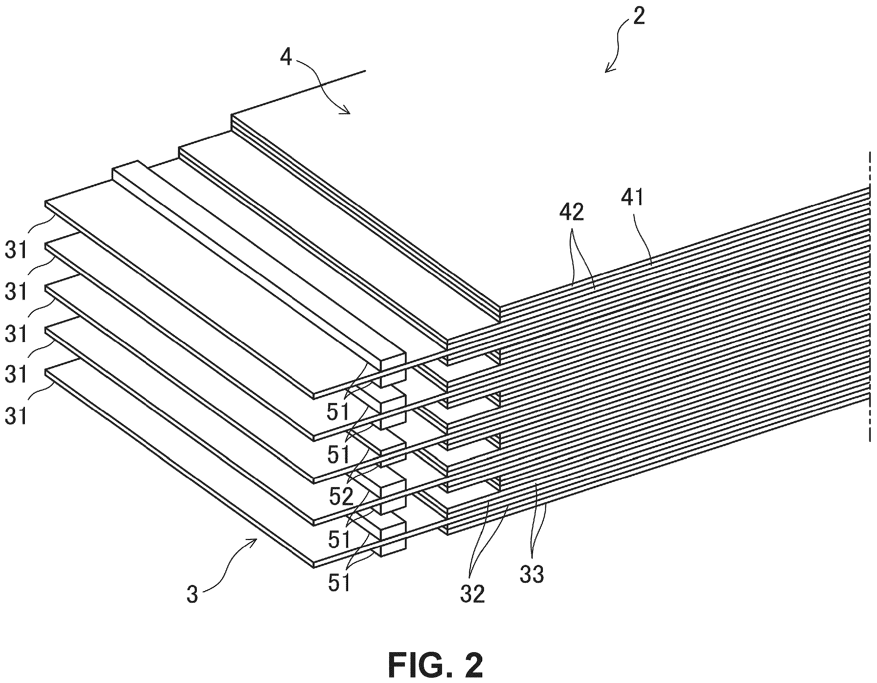

Fig. 1 schematically illustrates an overall structure of a battery cell 1. Fig. 2 illustrates an electric power generating element 2 that is accommodated in a pouch (or a container, or a package) 10 of the battery cell 1. The battery cell 1 may be a secondary battery. The battery cell 1 may be a lithium-ion battery, for example.

The pouch 10 of the battery cell 1 may be formed by folding a laminated material 11 or superimposing two laminated materials 11 in a bag shape. The laminated material 11 may have a multi-layer structure, particularly a three-layer structure in which a metal layer is sandwiched between two resin layers on both sides, for example. The metal layer may be made of aluminum or stainless steel, for example. The resin layer may be made of polypropylene (PP) or polyethylene (PE), for example.

The pouch 10 is sealed in a state of containing the electric power generating element 2 and an electrolyte. The battery cell 1 is a so-called pouch-type battery.

The electric power generating element 2 has one or more first electrode sheets 3 and one or more second electrode sheets 4. The first electrode sheet 3 may be an anode sheet, for example. The second electrode sheet 4 may be a cathode sheet, for example. However, the first electrode sheet 3 may be the cathode sheet, and the second electrode sheet 4 may be the anode sheet. The first electrode sheets 3 and the second electrode sheets 4 are alternately superimposed on each other. Appropriate numbers of the first electrode sheets 3 and the second electrode sheets 4 can be used in the electric power generating element 2. The electric power generating element 2 is an electrode stack. Hereinafter, a direction in which the first electrode sheets 3 and the second electrode sheets 4 are stacked may be referred to as a stacking direction.

The first electrode sheet 3 has a current collector 31 (i.e., the first electrode sheets 3 have current collectors 31). The current collector 31 is a thin plate material that extends in a direction orthogonal to the stacking direction. A first end portion of the current collector 31, that is, a left end portion thereof in Fig. 1, projects from a first opening 12 of the pouch 10 to the outside of the pouch 10.

Portions of upper and lower surfaces of the current collector 31, which are located inside the pouch 10, may be each coated with an active material. The active material may form a first electrode 32. The current collector 31 is connected to the first electrode 32.

The first electrode sheet 3 has a separator 33 (i.e., the first electrode sheets 3 have separators 33). The separator 33 separates the first electrode 32 of the first electrode sheet 3 from a second electrode 42 of the second electrode sheet 4. The second electrode 42 will be described below.

The separator 33 may be a porous material through which an ionic material can permeate, for example. The separator(s) 33 covers a surface of each of the two first electrodes 32 in the first electrode sheet 3. An area of the separator 33 may be larger than an area of the first electrode sheet 3.

The second electrode sheet 4 has a current collector 41 (i.e., the second electrode sheets 4 have current collectors 41). The current collector 41 is a thin plate material that extends in the direction orthogonal to the stacking direction. A second end portion of the current collector 41, that is, a right end portion thereof in Fig. 1, projects from a second opening 13 of the pouch 10 to the outside of the pouch 10.

The second opening 13 may be an opposite opening from the first opening 12 in the direction orthogonal to the stacking direction. A projecting direction of the current collector 41 is not limited to an opposite direction from a projecting direction of the current collector 31.

Portions of upper and lower surfaces of the current collector 41, which are located inside the pouch 10, may be each coated with the active material. The active material may form the second electrode 42. The current collector 41 is connected to the second electrode 42.

As described above, the first electrode sheets 3 and the second electrode sheets 4 are alternately stacked on each other. In the pouch 10, the first electrode sheets 32 and the second electrode sheets 42 are stacked in the stacking direction via the separators 33.

The first opening 12 of the pouch 10 is sealed by a resin 5. The resin 5 is located between the laminated material 11 and the current collector 31 and between the current collectors 31.

Similarly, the second opening 13 is sealed by the resin 5. The resin 5 is located between the laminated material 11 and the current collector 41 and between the current collectors 41.

The plural current collectors 31 separately project to the outside of the pouch 10 without being connected to each other in the pouch 10. Similarly, the plural current collectors 41 separately project to the outside of the pouch 10 without being connected to each other in the pouch 10.

Since a space for connecting the current collectors 31 and a space for connecting the current collectors 41 can be eliminated in the pouch 10, areas for the first electrodes 32 and the second electrodes 42 can be increased by an area of elimination. As a result, energy density of the battery cell 1 can be increased.

### (Method of Manufacturing Battery Cell)

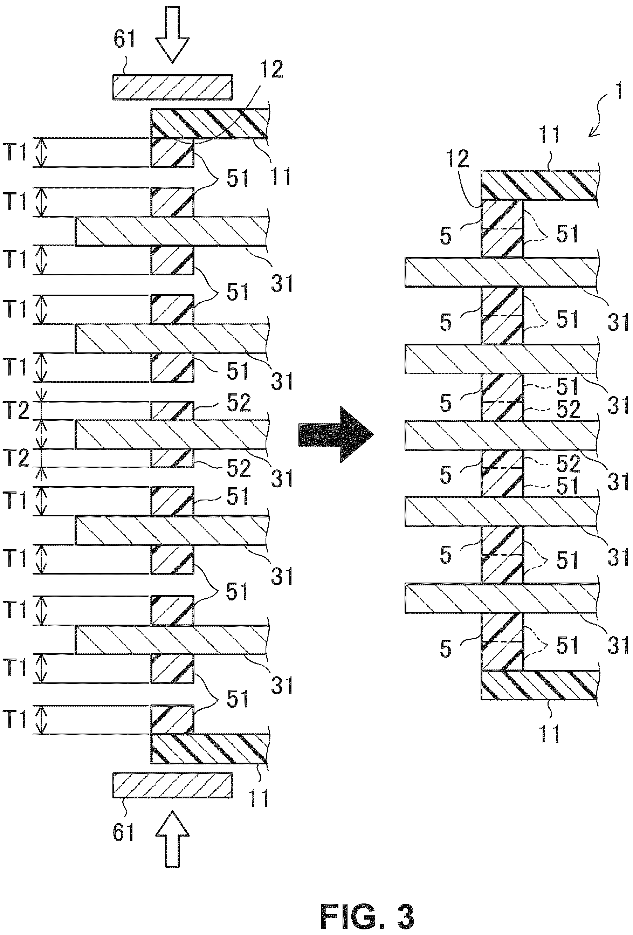

Next, a description will be made on a method of manufacturing the battery cell 1 with reference to Fig. 2 and Fig. 3. A description will herein be made on the method of manufacturing the battery cell 1 by using welding of the resin in the first opening 12 as an example. The same also applied to welding of the resin in the second opening 13.

First, the first electrode sheets 3 and the second electrode sheets 4 are prepared. As described above, the first electrode sheet(s) 3 has the current collector(s) 31, the first electrode(s) 32, and the separator(s) 33. The second electrode sheet(s) 4 has the current collector(s) 41 and the second electrode(s) 42.

The first electrode sheets 3 and the second electrode sheets 4 are alternately stacked on each other. The first electrode 32 and the second electrode 42 are superimposed on each other via the separator 33. As illustrated in Fig. 2, the electric power generating element 2 is formed which has the plural first electrode sheets 3 and the plural second electrode sheets 4 (that is, a first step).

Here, as illustrated in Fig. 2 and the left view of Fig. 3, in or on the current collector(s) 31 of the first electrode sheet 3, resins 51, 52 are welded to a portion (or portions) between the first end portion(s) and the first electrode(s) 32 in advance. The resins 51, 52 may be welded to the upper surface and the lower surface of the current collector 31.

Each of the resins 51, 52 extends along the surface of the current collector 31 in the direction orthogonal to the stacking direction. The resins 51, 52 form the resin 5 that seals the first opening 12 of the pouch 10. In the electric power generating element 2, the resins 51, 52 may be aligned in the stacking direction. Also, in or on the current collector(s) 41 of the second electrode sheet(s) 4, the resin(s) is welded to a portion (or portions) between the second end portion and the second electrode 42.

Each of the resins 51, 52 may be a thermoplastic resin. Each of the resins 51, 52 may be selected from cast polypropylene (CPP), low-density polyethylene (LDPE), linear low-density polyethylene (LLDPE), high-density polyethylene (HDPE), biaxially oriented polypropylene (OPP), polyethylene terephthalate (PET), and biaxially oriented nylon (ONY), for example.

After the electric power generating element 2 is formed, the laminated material 11 is provided to cover the electric power generating element 2. As illustrated in the left view of Fig. 3, an edge of the laminated material 11 may be located at a position that corresponds to the resins 51, 52 aligned in the stacking direction, and may be located on an outer side of the outermost current collector 31 in the stacking direction. In other words, in the left view of Fig. 3, the edges of the laminated material 11 may be respectively located above the uppermost current collector 31 and below the lowermost current collector 31 in a vertical direction.

The resin 51 is also welded to the edge of the laminated material 11. However, for example, the resin 51 may not be provided to the edge of the laminated material 11. In this case, the laminated material 11 is welded to the current collector 31 by a resin material that is contained in the laminated material 11.

Next, the resins 51, 52 that are aligned in the stacking direction are welded to each other. Here, the resins 51, 52 may be heat-plate welded. More specifically, as indicated by blank arrows in the left view of Fig. 3, two heat plates 61, 61, each of which is located on the outer side of the respective laminated material 11, pressurize and heat the resins 51, 52, which are aligned in the stacking direction, from the outer side to the center in the stacking direction (that is, a second step).

Thermal energy from the two heat plates 61, 61 is transferred from the outer side toward the center in the stacking direction through the laminated material 11, the resins 51, 52, and the current collectors 31, and the resins 51, 52 that are adjacent to each other in the stacking direction receive the thermal energy and are welded together. As illustrated in Fig. 3, the opening (the first opening 12 herein) of the pouch 10 between the laminated material 11 and the current collector 31 and the opening thereof between the current collectors 31 are sealed by the welded resin 5 (that is, a third step).

Here, the battery cell 1 may have large numbers of the first electrode sheets 3 and the second electrode sheets 4. During welding of the resins 51, 52, the resin 52 that is located at the center in the stacking direction may be away from the heat plates 61, 61. The thermal energy that is supplied to the resin 52 located at the center in the stacking direction may attenuate during the transfer through the large number of the current collectors 31 and the large number of the resins 51, and thus may be lower than the thermal energy that is supplied to the resin 51 located on the outer side in the stacking direction. A reduction in the supply energy possibly results in insufficient welding of the resin 52.

In this respect, particularly, not all of the resins 51, 52 of the first electrode sheet(s) 3 and the resin of the second electrode sheet(s) 4 have the same thickness in the stacking direction. The thickness of the resin located at the center in the stacking direction, that is, a thickness T2 of the second resin 52 is less than the thickness of the resin located on the outer side in the stacking direction, that is, a thickness T1 of the first resin 51. A volume of the second resin 52 is relatively small. The second resins 52 are welded to the upper surface and the lower surface of the current collector 31 that is located at the center in the stacking direction. Here, the number of the current collectors 31, to which the second resins 52 are welded, is not limited to one. The second resins 52 may be welded to the plural current collectors 31 that are located at the center in the stacking direction. In addition, welding of the second resins 52 is not limited to that to both of the upper surface and the lower surface of the current collector 31. The second resin 52 may be welded to one of the upper surface and the lower surface of each current collector 31, and the first resin 51 may be welded to the other of the upper surface and the lower surface of each current collector 31.

The supply energy per unit volume to the second resin 52 may be equivalent to the supply energy per unit volume to the first resin 51. Even when the supply energy to the second resin 52 is relatively low, the second resin 52 ensures sufficient welding together with another resin. On the contrary, even when the supply energy to the first resin 51 is relatively high, the first resin 51 ensures stable welding with another resin without excessive melting. In this way, it is possible to suppress insufficient welding of the resins 51, 52 during manufacturing of the battery cell 1.

As illustrated in the right view of Fig. 3, in regard to the resins 5 for sealing the first opening 12 and/or the second opening 13 of the pouch 10, the manufactured battery cell 1 has a characteristic that a thickness (T1 + T2) in the stacking direction of the resin 5 located at the center in the stacking direction is less than a thickness (T1 + T1) in the stacking direction of the resin 5 located on the outer side in the stacking direction. The battery cell 1 that has this structural characteristic suppresses insufficient welding of the resins 51, 52 during manufacturing, and thus can stabilize quality.

### (Modified Example 1)

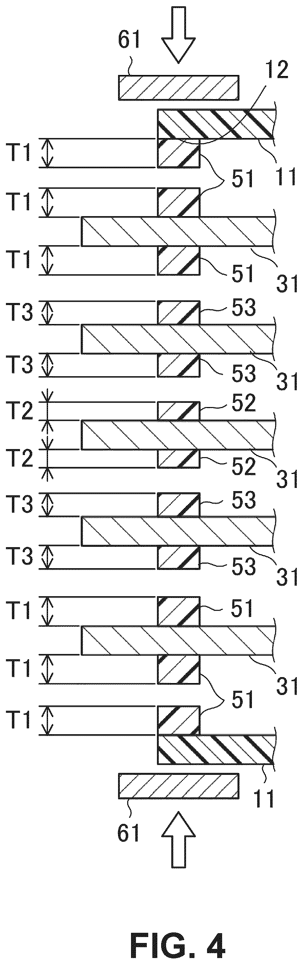

Fig. 4 illustrates a modified example related to the thickness of the resin. In or on the first electrode sheet 3 of Fig. 4, the thickness T2 of the second resin 52, which is located at the center in the stacking direction, is less than the thickness T1 of the first resin 51, which is located on the outer side in the stacking direction. In addition, a thickness T3 of a third resin 53 that is located between the first resin 51 and the second resin 52 is less than the thickness T1 and greater than the thickness T2. That is, the thicknesses of the resins 51, 52, 53 are reduced particularly in a stepwise manner from the outer side to the center in the stacking direction.

The thermal energy for welding is transferred in an order of the first resin 51, the third resin 53, and the second resin 52. The supply energy per unit volume to the third resin 53 may be equivalent to the supply energy per unit volume to the second resin 52 or the supply energy per unit volume to the first resin 51. The first resin 51, the second resin 52, and the third resin 53 are each supplied with the energy commensurate with the volume thereof. Each of the first resin 51, the second resin 52, and the third resin 53 can be welded sufficiently with another resin.

The number of the current collectors 31, to which the third resin 53 is welded, is appropriately set. In addition, welding of the third resin 53 is not limited to that to both of the upper surface and the lower surface of the current collector(s) 31. The third resin 53 may be welded to one of the upper surface and the lower surface of the current collector 31, and the first resin 51 or the second resin 52 may be welded to the other of the upper surface and the lower surface of the current collector 31.

### (Modified Example 2)

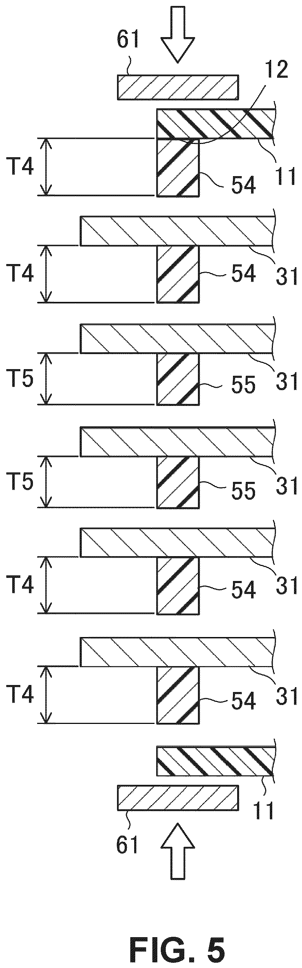

Fig. 5 illustrates a modified example related to the form of the resin that is welded to the current collector. In or on the first electrode sheet 3 (and the second electrode sheet 4) illustrated in Fig. 3 or Fig. 4, each of the resins 51, 52 is welded to both of the surfaces of the current collector 31 (or the current collector 41) in advance. Conversely, in or on the first electrode sheet 3 (and the second electrode sheet 4) illustrated in Fig. 5, each of a first resin 54 and a second resin 55 is welded to only one of the surfaces of the current collector 31 (or the current collector 41) in advance. In addition, the first resin 54 is welded to one of the two edges of the laminated materials 11 in advance.

A thickness T5 of the second resin 55, which is located at the center in the stacking direction, is less than a thickness T4 of the first resin 54, which is located on the outer side in the stacking direction.

The resins 54, 55 are welded to the current collector(s) 31 or the laminated material 11 instead of another resin. During welding of the resins 54, 55, the supply energy per unit volume to the second resin 55 may be equivalent to the supply energy per unit volume to the first resin 54. The second resin 55 can sufficiently be welded to the current collector 31. The first resin 54 can also sufficiently be welded to the current collector 31 or the laminated material 11. In this way, it is possible to suppress insufficient welding of the resins 54, 55 during manufacturing of the battery cell 1.

### (Modified Example 3)

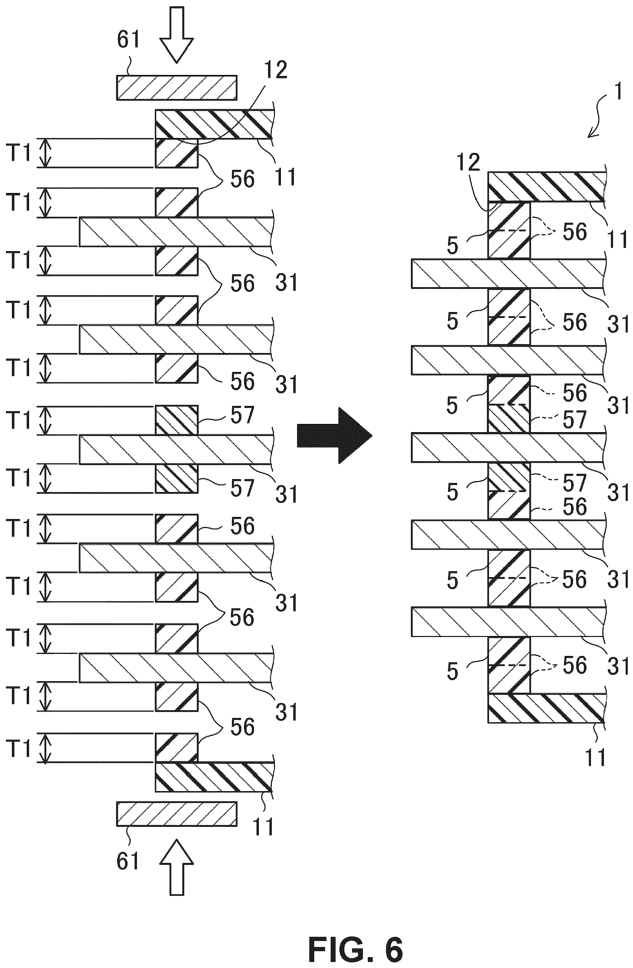

Fig. 6 illustrates a modified example related to a melting point of the resin. The resins 51 to 55 in the battery cells 1 illustrated in Figs. 3 to 5 vary in thickness. The resins 51 to 55 may be the same type of the resin, and the resins 51 to 55 may have the same melting point.

In the battery cell 1 of Fig. 6, resins 56, 57 have different melting points. More specifically, the melting point of the second resin 57, which is located at the center in the stacking direction, is lower than the melting point of the first resin 56, which is located on the outer side in the stacking direction.

Here, the first resin 56 with the relatively high melting point can be selected from biaxially oriented polypropylene (OPP), polyethylene terephthalate (PET), and biaxially oriented nylon (ONY), for example. The melting point of the first resin 56 may be in a range of 165 to 264°C, for example.

The second resin 57 with the relatively low melting point can be selected from cast polypropylene (CPP), low-density polyethylene (LDPE), linear low-density polyethylene (LLDPE), and high-density polyethylene (HDPE), for example. The melting point of the second resin 57 may be in a range 105 to 165°C or 105 to 164°C.

An additive may be added to the second resin 57 to lower the melting point. For example, any of phthalate-based additive, phosphate-based additive, fatty acid ester-based additive, polyester-based additive, epoxy-based additive, and sulfonamide-based additive may be used.

During welding of the resins 56, 57 illustrated in a left view of Fig. 6, the second resin 57 with the low melting point can sufficiently be welded even with the low supplied thermal energy. Meanwhile, since the high thermal energy is supplied to the first resin 56 with the high melting point, the first resin 56 can sufficiently be welded. In this way, it is possible to suppress insufficient welding of the resins 56, 57 during manufacturing of the battery cell 1.

As illustrated in a right view of Fig. 6, in regard to the resins 5 for sealing the first opening 12 and/or the second opening 13 of the pouch 10, the manufactured battery cell 1 has a characteristic that the melting point of the resin 5 located at the center in the stacking direction is lower than the melting point of the resin 5 located on the outer side in the stacking direction. That is, of the resins 5 that are welded to the current collectors 31 at the positions between the current collectors 31, the resin 5 located at the center in the stacking direction contains the resin 57 with the low melting point. The battery cell 1 that has this structural characteristic suppresses insufficient welding of the resins 56, 57 during manufacturing, and thus can stabilize the quality.

In Fig. 6, the thickness T1 of the second resin 57 in the stacking direction may be the same as the thickness T1 of the first resin 56. However, the thickness of the second resin 57 in the stacking direction may be less than the thickness T1 of the first resin 56.

The number of the current collectors 31, to which the second resin(s) 57 is(are) welded, is appropriately set. **In** addition, welding of the second resin 57 is not limited to that to both of the upper surface and the lower surface of the current collector 31. The second resin 57 may be welded to one of the upper surface and the lower surface of the current collector 31, and the first resin 56 may be welded to the other of the upper surface and the lower surface of the current collector 31.

### (Modified Example 4)

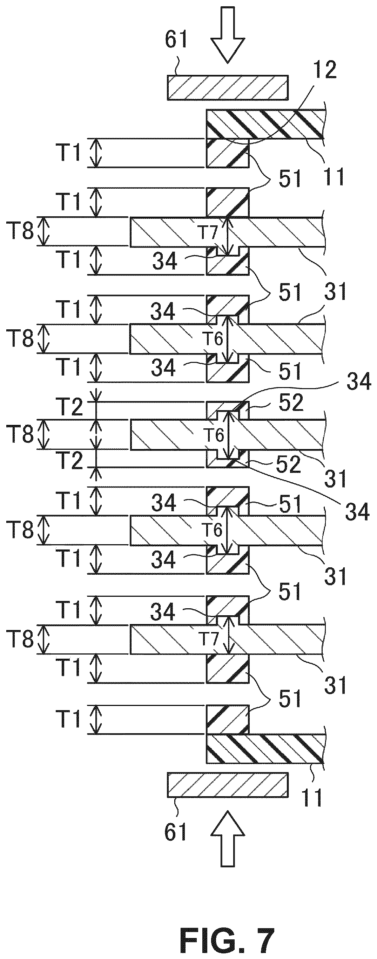

Fig. 7 illustrates a modified example related to a shape of the current collector. The battery cells 1 in Figs. 3 to 6 are structured such that the second resins 52, 55, 57 can sufficiently be welded even with the low supplied energy to the second resins 52, 55, 57, each of which is located at the center in the stacking direction.

**In** detail, in the battery cells 1 illustrated in Figs. 3 to 5, the second resins 52, 55, each of which is located at the center in the stacking direction, are thin in order to increase the supply energy per unit voltage to the second resins 52, 55, each of which is located at the center in the stacking direction. **In** the battery cell 1 of Fig. 6, the second resin 57, which is located at the center in the stacking direction, has the low melting point such that the second resin 57 is welded even when the energy received by the second resin 57 is low.

The battery cell 1 in Fig. 7 promotes energy transfer to increase an amount of the energy supplied to the second resin 52, which is located at the center in the stacking direction. More specifically, the battery cell 1 in Fig. 7 uses a fact that the current collector 31 made of the metal has higher energy transfer efficiency than the resins 51, 52.

In the current collector 31, thicknesses T6, T7 of portions, to each of which respective one of the resins 51, 52 is welded, are greater than a thickness T8 of the other portions. It can be rephrased that the current collector 31 has one or two projections 34 in the portion, to which one of the resins 51, 52 is welded. The thicknesses of the resins 51, 52 may be reduced due to the thicknesses T6, T7 of the current collectors 31.

In the battery cell 1 of Fig. 7, the thickness T2 of the second resin 52, which is located at the center in the stacking direction, is less than the thickness T1 of the first resin 51, which is located on the outer side in the stacking direction. In contrast, the thickness of the second resin 52 may be the same as the thickness T1 of the first resin 51.

During welding of the resins 51, 52, the thermal energy from the heat plates 61, 61 is transferred to the second resin 52 through the first resin 51 and the current collector 31. The thickness of the first resin 51 is reduced due to the large thickness of the current collector 31. Since the current collector 31, which is made of the metal, has relatively low specific heat, attenuation of the thermal energy up to reaching to the second resin 52 is suppressed. The second resin 52 can receive the sufficient thermal energy for welding. In this way, it is possible to suppress insufficient welding of the resins 51, 52 during manufacturing of the battery cell 1.

All of the current collectors 31 may have the single projection 34, or all of the current collectors 31 may have the two projections 34. In addition, the second resin 52 may be the resin with the lower melting point than the first resin 51.

### (Modified Example 5)

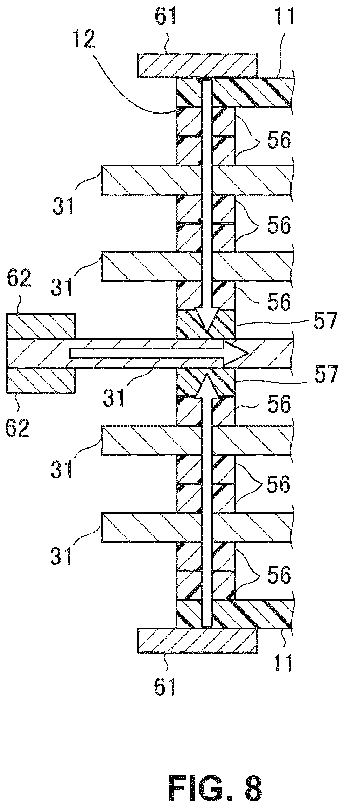

Fig. 8 illustrates a modified example of the method of manufacturing the battery cell 1. More specifically, in this manufacturing method, not only the heat plates 61, 61, each of which is located on the outer side in the stacking direction, (that is, first heat sources 61, 61) but also second heat sources 62, 62 are used during welding of the resins 56, 57.

The second heat sources 62, 62 may be connected to the current collector 31 that is in contact with the second resins 57 located at the center in the stacking direction. A projection length of this current collector 31 may be longer than those of the other current collectors 31. This current collector 31 may have a connection allowance for the second heat sources 62, 62. The number of the current collectors 31, to which the second heat sources 62, 62 are connected, is not limited to one but may be plural.

As described above, during welding of the resins 56, 57, the first heat sources 61, 61 pressurize and heat the resins 56, 57 in the stacking direction. The second heat sources 62, 62 supply the thermal energy to the resins 57 through the current collector 31. As indicated by blank arrows in Fig. 8, the second resin 57 receives the thermal energy from the first heat sources 61, 61 and the second heat sources 62, 62. In this way, the second resin 57 can sufficiently be welded. The first resin 56 can also sufficiently be welded.

In the modified example of Fig. 8, the second resin 57 may be a different type of the resin from the first resin 56, and the melting point thereof may be relatively low, for example. However, the second resin 57 may be of the same type as the first resin 56.

In addition, the thickness of the second resin 57 may be less than or the same as the thickness of the first resin 56.

### (Other Modified Examples)

Heat-plate welding is performed in the above description. However, the resins may be welded by vibration welding, ultrasonic welding, or high-frequency welding, for example. In the various welding methods, all of the above-described configurations ensure sufficient welding of the resin, which is located at the center in the stacking direction, even with the attenuation of the energy for welding.

The features of the above-described plural configurations can be combined, to the extent possible.

### [Reference Signs List]

1: BATTERY CELL
10: POUCH
12: FIRST OPENING
13: SECOND OPENING
31: CURRENT COLLECTOR
32: FIRST ELECTRODE
41: CURRENT COLLECTOR
42: SECOND ELECTRODE
51, 54, 56: FIRST RESIN
52, 55, 57: SECOND RESIN
53: THIRD RESIN

## Claims

1. A battery cell (1) comprising:
a pouch (10) that is configured to accommodate electrodes (32);
plural current collectors (31), each of which is connected to a corresponding one of the electrodes (32) in the pouch (10), the plural current collectors (31) being stacked in a stacking direction, the plural current collectors (31) projecting to the outside of the pouch (10) through an opening (12) of the pouch (10);
a first resin (51, 54, 56) that is configured to seal the opening (12) of the pouch (10), the first resin (51, 54, 56) being welded to the current collector (31) at a position between the stacked current collectors (31); and
a second resin (52, 55, 57) that is configured to seal the opening (12) of the pouch (10), the second resin (52, 55, 57) being welded to the current collector (31) at a position between the stacked current collectors (31), and being located closer to a center in the stacking direction than the first resin (51, 54, 56) is to the center,
wherein the second resin (52, 55, 57) has a thickness (T2, T5) thinner than a thickness (T1, T4) of the first resin (51, 54) in the stacking direction and/or has a lower melting point than the first resin (56).

2. The battery cell (1) according to claim 1 further comprising:
a third resin (53) that is configured to seal the opening (12) of the pouch (10), the third resin (53) being welded to the current collector (31) at a position between the stacked current collectors (31), being located between the first resin (51, 54, 56) and the second resin (52, 55, 57) in the stacking direction, and having a thickness (T3) thinner than the thickness (T1, T4) of the first resin (51, 54) in the stacking direction and thicker than the thickness (T2, T5) of the second resin (52, 55) in the stacking direction.

3. The battery cell (1) according to claim 1 or 2, wherein
thickness (T6, T7) of the current collectors (31), to which the first resin (51) and/or the second resin (52) are welded, are thicker than thickness (T8) of other portions of the current collector (31) in the stacking direction.

4. The battery cell (1) according to claim 3, wherein
the current collectors (31) have projections (34) to which the first resin (51) and/or the second resin (52) are welded.

5. The battery cell (1) according to any one of the preceding claims, further comprising
an additive added to the second resin (52, 55, 57).

6. The battery cell (1) according to claim 5, wherein
the additive is configured to lower the melting point.

7. A method of manufacturing a battery cell (1), the method comprising:
stacking electrode sheets in a stacking direction, each of the electrode sheets having: an electrode (32) located in a pouch (10); and a current collector (31) connected to the electrode (32) in the pouch (10) and projecting to the outside from an opening (12) of the pouch (10);
pressurizing and heating a first resin (51, 54, 56) and a second resin from an outer side toward a center in the stacking direction, the first resin (51, 54, 56) being located at a position between the stacked current collectors (31), the second resin (52, 55, 57) being located at a position between the current collectors (31) and closer to the center in the stacking direction than the first resin (51, 54, 56) is to the center, wherein the second resin (52, 55, 57) has a thickness (T2, T5) thinner than a thickness (T1, T4) of the first resin (51, 54) in the stacking direction and/or has a lower melting point than the first resin (56); and
at the positions between the current collectors (31), welding the first resin (51, 54, 56) and welding the second resin (52, 55, 57) to seal the opening (12) of the pouch (10).

8. The method according to claim 7 further comprising:
further heating the second resin (52, 55, 57) through the current collector (31) that is in contact with the second resin (52, 55, 57) during pressurizing and heating of the first resin (51, 54, 56) and the second resin (52, 55, 57).

## Patentansprüche

1. Batteriezelle (1), umfassend:
einen Beutel (10), der konfiguriert ist, um Elektroden (32) unterzubringen;
mehrere Stromkollektoren (31), von denen jeder mit einer entsprechenden der Elektroden (32) in dem Beutel (10) verbunden ist, wobei die mehreren Stromkollektoren (31) in einer Stapelrichtung gestapelt sind, wobei die mehreren Stromkollektoren (31) nach außen von dem Beutel (10) durch eine Öffnung (12) des Beutels (10) ragen;
ein erstes Harz (51, 54, 56), das konfiguriert ist, um die Öffnung (12) des Beutels (10) abzudichten, wobei das erste Harz (51, 54, 56) an den Stromkollektor (31) an einer Position zwischen den gestapelten Stromkollektoren (31) geschweißt ist; und
ein zweites Harz (52, 55, 57), das konfiguriert ist, um die Öffnung (12) des Beutels (10) abzudichten, wobei das zweite Harz (52, 55, 57) an den Stromkollektor (31) an einer Position zwischen den gestapelten Stromkollektoren (31) geschweißt ist und sich näher an einer Mitte in der Stapelrichtung befindet als das erste Harz (51, 54, 56) zu der Mitte ist,
wobei das zweite Harz (52, 55, 57) eine Dicke (T2, T5), die geringer als die Dicke (T1, T4) des ersten Harzes (51, 54) in der Stapelrichtung ist, aufweist und/oder einen niedrigeren Schmelzpunkt als das erste Harz (56) aufweist.

2. Batteriezelle (1) nach Anspruch 1, ferner umfassend:
ein drittes Harz (53), das konfiguriert ist, um die Öffnung (12) des Beutels (10) abzudichten, wobei das dritte Harz (53) an den Stromkollektor (31) an einer Position zwischen den gestapelten Stromkollektoren (31) geschweißt ist, die sich zwischen dem ersten Harz (51, 54, 56) und dem zweiten Harz (52, 55, 57) in der Stapelrichtung befindet und eine Dicke (T3), die geringer als die Dicke (T1, T4) des ersten Harzes (51, 54) in der Stapelrichtung und dicker als die Dicke (T2, T5) des zweiten Harzes (52, 55) in der Stapelrichtung ist, aufweist.

3. Batteriezelle (1) nach Anspruch 1 oder 2, wobei
die Dicken (T6, T7) der Stromkollektoren (31), an die das erste Harz (51) und/oder das zweite Harz (52) geschweißt sind, größer als die Dicken (T8) von anderen Abschnitten des Stromkollektors (31) in der Stapelrichtung sind.

4. Batteriezelle (1) nach Anspruch 3, wobei
die Stromkollektoren (31) Vorsprünge (34) aufweisen, an die das erste Harz (51) und/oder das zweite Harz (52) geschweißt sind.

5. Batteriezelle (1) nach einem der vorstehenden Ansprüche, ferner umfassend
ein Additiv, das dem zweiten Harz (52, 55, 57) zugesetzt wird.

6. Batteriezelle (1) nach Anspruch 5, wobei
das Additiv konfiguriert ist, um den Schmelzpunkt zu senken.

7. Verfahren zum Herstellen einer Batteriezelle (1), das Verfahren umfassend:
Stapeln von Elektrodenschichten in einer Stapelrichtung, wobei jede der Elektrodenschichten aufweist: eine Elektrode (32), die sich in einem Beutel (10) befindet; und einen Stromkollektor (31), der mit der Elektrode (32) in dem Beutel (10) verbunden ist und nach außen von einer Öffnung (12) des Beutels (10) ragt;
Druckbeaufschlagen und Erhitzen eines ersten Harzes (51, 54, 56) und eines zweiten Harzes von einer Außenseite zu einer Mitte in der Stapelrichtung hin, wobei sich das erste Harz (51, 54, 56) an einer Position zwischen den gestapelten Stromkollektoren (31) befindet, sich das zweite Harz (52, 55, 57) an einer Position zwischen den Stromkollektoren (31) und näher an der Mitte in der Stapelrichtung befindet, als das erste Harz (51, 54, 56) zu der Mitte ist, wobei das zweite Harz (52, 55, 57) eine Dicke (T2, T5), die geringer als eine Dicke (T1, T4) des ersten Harzes (51, 54) in der Stapelrichtung ist, aufweist und/oder einen niedrigeren Schmelzpunkt als das erste Harz (56) aufweist; und
an den Positionen zwischen den Stromkollektoren (31) Schweißen des ersten Harzes (51, 54, 56) und des zweiten Harzes (52, 55, 57), um die Öffnung (12) des Beutels (10) abzudichten.

8. Verfahren nach Anspruch 7, ferner umfassend:
weiteres Erhitzen des zweiten Harzes (52, 55, 57) durch den Stromkollektor (31), der mit dem zweiten Harz (52, 55, 57) während des Druckbeaufschlagens und Erhitzens des ersten Harzes (51, 54, 56) und des zweiten Harzes (52, 55, 57) in Kontakt steht.

## Revendications

1. Cellule de batterie (1) comprenant :
une poche (10) qui est conçue pour accueillir des électrodes (32) ;
plusieurs collecteurs de courant (31), dont chacun est connecté à une électrode correspondante parmi les électrodes (32) dans la poche (10), les collecteurs de courant (31) étant empilés dans une direction d'empilement, les collecteurs de courant (31) faisant saillie vers l'extérieur de la poche (10) à travers une ouverture (12) de la poche (10) ;
une première résine (51, 54, 56) qui est conçue pour sceller l'ouverture (12) de la poche (10), la première résine (51, 54, 56) étant soudée au collecteur de courant (31) au niveau d'une position entre les collecteurs de courant (31) empilés ; et
une deuxième résine (52, 55, 57) qui est conçue pour sceller l'ouverture (12) de la poche (10), la deuxième résine (52, 55, 57) étant soudée au collecteur de courant (31) au niveau d'une position entre les collecteurs de courant (31) empilés, et étant située plus près d'un centre dans la direction d'empilement que la première résine (51, 54, 56) ne l'est du centre,
dans laquelle la deuxième résine (52, 55, 57) a une épaisseur (T2, T5) inférieure à une épaisseur (T1, T4) de la première résine (51, 54) dans la direction d'empilement et/ou a un point de fusion inférieur à celui de la première résine (56).

2. Cellule de batterie (1) selon la revendication 1 comprenant en outre :
une troisième résine (53) qui est conçue pour sceller l'ouverture (12) de la poche (10), la troisième résine (53) étant soudée au collecteur de courant (31) au niveau d'une position entre les collecteurs de courant (31) empilés, étant située entre la première résine (51, 54, 56) et la deuxième résine (52, 55, 57) dans la direction d'empilement, et ayant une épaisseur (T3) inférieure à l'épaisseur (T1, T4) de la première résine (51, 54) dans la direction d'empilement et supérieure à l'épaisseur (T2, T5) de la deuxième résine (52, 55) dans la direction d'empilement.

3. Cellule de batterie (1) selon la revendication 1 ou 2, dans laquelle
une épaisseur (T6, T7) des collecteurs de courant (31) auxquels la première résine (51) et/ou la deuxième résine (52) sont soudées est supérieure à une épaisseur (T8) d'autres parties du collecteur de courant (31) dans la direction d'empilement.

4. Cellule de batterie (1) selon la revendication 3, dans laquelle
les collecteurs de courant (31) ont des saillies (34) auxquelles la première résine (51) et/ou la deuxième résine (52) sont soudées.

5. Cellule de batterie (1) selon l'une quelconque des revendications précédentes, comprenant en outre
un additif ajouté à la deuxième résine (52, 55, 57).

6. Cellule de batterie (1) selon la revendication 5, dans laquelle
l'additif est conçu pour abaisser le point de fusion.

7. Procédé pour la fabrication d'une cellule de batterie (1), le procédé comprenant :
l'empilement de feuilles à électrodes dans une direction d'empilement, chacune des feuilles à électrodes ayant : une électrode (32) située dans une poche (10) ; et un collecteur de courant (31) connecté à l'électrode (32) dans la poche (10) et faisant saillie vers l'extérieur à partir d'une ouverture (12) de la poche (10) ;
la pressurisation et le chauffage d'une première résine (51, 54, 56) et d'une deuxième résine depuis un côté extérieur vers un centre dans la direction d'empilement, la première résine (51, 54, 56) étant située au niveau d'une position entre les collecteurs de courant (31) empilés, la deuxième résine (52, 55, 57) étant située au niveau d'une position entre les collecteurs de courant (31) et étant plus proche du centre dans la direction d'empilement que la première résine (51, 54, 56) ne l'est du centre, dans lequel la deuxième résine (52, 55, 57) a une épaisseur (T2, T5) inférieure à une épaisseur (T1, T4) de la première résine (51, 54) dans la direction d'empilement et/ou a un point de fusion inférieur à celui de la première résine (56) ; et
au niveau des positions entre les collecteurs de courant (31), le soudage de la première résine (51, 54, 56) et le soudage de la deuxième résine (52, 55, 57) pour sceller l'ouverture (12) de la poche (10).

8. Procédé selon la revendication 7 comprenant en outre :
le chauffage supplémentaire de la deuxième résine (52, 55, 57) par l'intermédiaire du collecteur de courant (31) qui est en contact avec la deuxième résine (52, 55, 57) pendant la pressurisation et le chauffage de la première résine (51, 54, 56) et de la deuxième résine (52, 55, 57).
